# EUROPEAN PATENT APPLICATION

(11) **EP 3 876 152 A1**
(43) Date of publication of application: **08.09.2021**
(21) Application number: 18938754.1
(22) Date of filing: 01.11.2018
(51) Int. Cl.: G06K 19/06, G06K 1/12, G06K 7/14

(54) **ENCODING METHOD, DECODING METHOD, ENCODER, AND DECODER**

(71) Applicant: Mizoguchi, Satoshi, Tokyo 161-0035 (JP)
(72) Inventor: Mizoguchi, Satoshi, Tokyo 161-0035 (JP)
(74) Representative: Gill Jennings & Every LLP
(86) International application number: PCT/JP2018/040733
(87) International publication number: WO 2020/090088

(57) **Abstract**

There is provided an encoding method for encoding a two-dimensional code using an encoder, wherein in accordance with a predetermined area allocation policy, the encoder generates a primary two-dimensional tally code having a primary effective area containing primary distribution information and a primary dummy area, and generates a secondary two-dimensional tally code having a secondary effective area containing secondary distribution information and disposed in a position where the primary dummy area is disposed and a secondary dummy area disposed in a position where the primary effective area is disposed.

## Description

### BACKGROUND OF THE INVENTION

### Field of the Invention

The present invention relates to an encoding method, a decoding method, an encoder, and a decoder.

### Description of the Related Art

There have conventionally been proposed technologies in which information is embedded in a two-dimensional code such as a QR code (registered trademark) in order to transmit the information to an information processing device equipped with a camera. For example, Japanese Patent No. 4268575 describes an authentication system including a means for reading a secondary code containing a transaction ID and a primary tally pattern, which are displayed on a display of a user's mobile terminal, a means for extracting a secondary tally pattern associated with the transaction ID from a storage means, and a means for restoring a secondary code of a personalized electronic certificate data by superposing the primary tally pattern and the secondary tally pattern one on the other. With this authentication system, a delivery command for an article selected by the user can be outputted by confirming the personalized electronic certificate data.

In the authentication system of Japanese Patent No. 4268575, in generating tally patterns, an original tally pattern and a duplicate tally pattern are generated by applying an original master pattern application process and a duplicate master pattern application process to a data cell portion, and thereafter, a tally code generation unit performs an adding process of an adjustment pattern to each of the original tally pattern and the duplicate tally pattern. In addition, in restoring a QR code, an Exclusive-OR operation is applied to each of the adjusted original tally pattern and the adjusted duplicate tally pattern. This makes the secret distribution process of the two-dimensional code and the restoring process thereof complex, whereby the authentication system has to bear a great load.

### SUMMARY OF THE INVENTION

The present invention has been made in view of the problem described above, and an object thereof is to provide an encoding method, a decoding method, an encoder, and a decoder which can provide a safety secret distribution with a simple configuration.

According to an aspect of the present invention, there is provided an encoding method for encoding a two-dimensional code using an encoder, wherein in accordance with a predetermined area allocation policy, the encoder generates a primary two-dimensional tally code having a primary effective area containing primary distribution information and a primary dummy area, and generates a secondary two-dimensional tally code having a secondary effective area containing secondary distribution information and disposed in a position where the primary dummy area is disposed and a secondary dummy area disposed in a position where the primary effective area is disposed.

According to another aspect of the present invention, there is provided a decoding method for decoding a two-dimensional code using a decoder, wherein the decoder obtains a primary two-dimensional tally code having a primary effective area containing primary distribution information and a primary dummy area, obtains a secondary two-dimensional tally code having a secondary effective area containing secondary distribution information and disposed in a position where the primary dummy area is disposed and a secondary dummy area disposed in a position where the primary effective area is disposed, the primary two-dimensional tally code and the secondary two-dimensional tally code being generated in accordance with a predetermined area allocation policy, cuts out the primary effective area and the secondary effective area in accordance with the area allocation policy, and disposes the primary effective area and the secondary effective area in positions corresponding to positions where the primary effective area and the secondary effective area are disposed before the primary effective area and the secondary effective area are cut out to thereby combine the primary effective area and the secondary effective area as a data area of the two-dimensional code.

According to a further aspect of the present invention, there is provided an encoder configured to in accordance with a predetermined area allocation policy generate a primary two-dimensional tally code having a primary effective area containing primary distribution information and a primary dummy area and generate a secondary two-dimensional tally code having a secondary effective area containing secondary distribution information and disposed in a position where the primary dummy area is disposed and a secondary dummy area disposed in a position where the first effective area is disposed.

According to an aspect of the present invention, there is provided a decoder configured to obtain a primary two-dimensional tally code having a primary effective area containing primary distribution information and a primary dummy area, obtain a secondary two-dimensional tally code having a secondary effective area containing secondary distribution information and disposed in a position where the primary dummy area is disposed and a secondary dummy area disposed in a position where the primary effective area is disposed, the primary two-dimensional tally code and the secondary two-dimensional tally code being generated in accordance with a predetermined area allocation policy, cut out the primary effective area and the secondary effective area in accordance with the area allocation policy, and dispose the primary effective area and the secondary effective area in positions corresponding to positions before the primary effective area and the secondary effective area are cut out to thereby combine the primary effective area and the secondary effective area as a data area of the two-dimensional code.

According to the present invention, the encoding method, the decoding method, the encoder, and the decoder, which can provide the safety secret distribution, can be provided.

### BRIEF DESCRIPTION OF THE DRAWINGS

FIG. 1 is an overall view of a system according to Embodiment 1 of the present invention;
FIG. 2A is a drawing showing a two-dimensional code according to Embodiment 1 of the present invention, which shows a configuration of the two-dimensional code;
FIG. 2B is a drawing showing the two-dimensional code according to Embodiment 1 of the present invention, which schematically shows a two-dimensional tally code and a restored two-dimensional code;
FIG. 3 is a sequence diagram of the system according to Embodiment 1 of the present invention;
FIG. 4 is a drawing showing an application example of a two-dimensional tally code according to Embodiment 2 of the present invention; and
FIG. 5 is a drawing showing an application example of two-dimensional tally codes according to Embodiment 3 of the present invention.

### DETAILED DESCRIPTION

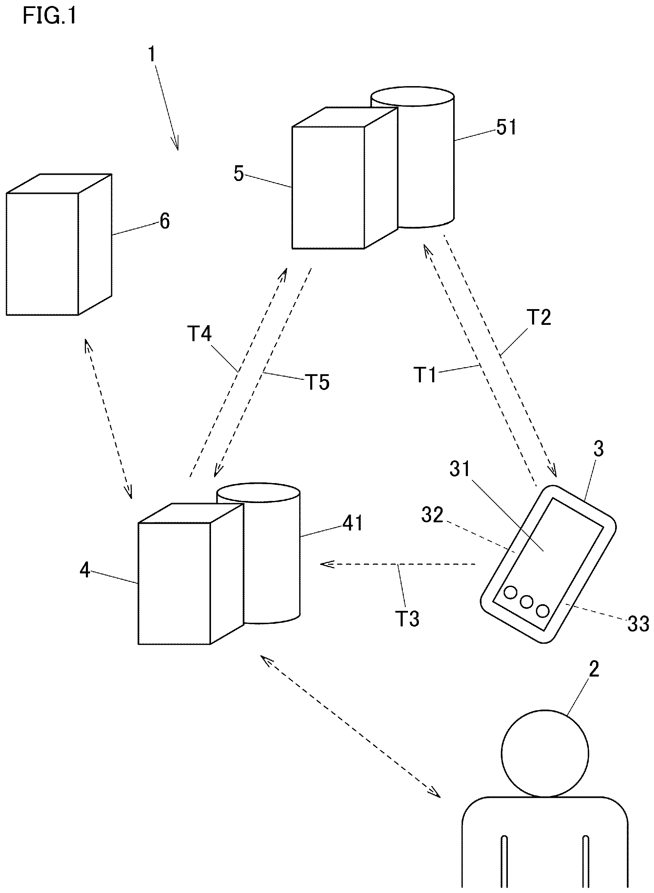

Hereinafter, embodiments of the present invention will be described by use of accompanying drawings. FIG. 1 is an overall view of a system 1 according to Embodiment 1 of the present invention. In the system 1 of the present embodiment, a user 2 uses a terminal 3 to be authenticated by an authentication device 4, while the authentication device 4 provides various types of services for the user 2. Here, the embodiment will be described by taking it for an example that the user 2 uses an account transaction service provided by the authentication device 4, which then functions as an automatic teller machine. In addition, whether the user 2 who uses the terminal 3 is true or false is determined by the authentication device 4 obtaining authentication information distributed to the terminal 3 and the authentication device 4 from a server 5.

The terminal 3 is a device such as a mobile phone, a smartphone, PDA, PC, or the like, which is associated with the user 2. The terminal 3 has a display section 31 for displaying information thereon, a transmission and reception section 32 for transmitting and receiving data to and from the server 5, and a storage section 33 for storing various types of data.

The terminal 3 is configured to allow the user 2 to log in through a password authentication, a biometric authentication, or the like to use the function or the service. In addition, the terminal 3 is authenticated by the server 5 when the server 5 validates the authentication information such as the identification data (ID), password, and the like of the user 2 so as to exchange a secure communication with the server 5.

The server 5 has a function of an encoder for generating (encoding) a two-dimensional code in the form of an electronic tally and distributes the two-dimensional code in the form of electronic tally (a two-dimensional tally code, which will be described later) to the terminal 3 and the authentication device 4. The two-dimensional code contains authentication information that is used when the terminal 3 is authenticated by the authentication device 4. In addition, the server 5 has a storage section 51 for storing an area allocation policy that is used in generating (encoding) a two-dimensional code in the form of an electronic tally.

The authentication device 4 is connected with a bank server 6 and can transmit and receive information to and from the bank server 6, the information being necessary for the authentication device 4 to provide a bank account service for the terminal 3 or the user 2. A secure communication is also established between the authentication device 4 and the server 5. The authentication device 4 has a storage section 41 for storing data such as two-dimensional codes or the like that the authentication device 4 receives from the server 5 and the bank server 6. In addition, the authentication device 4 has a function as a decoder for decoding a two-dimensional code in the form of an electronic tally that the authentication device 4 receives from the terminal 3 or the server 5. The area allocation policy for use in decoding the two-dimensional code is also stored in the storage section 41.

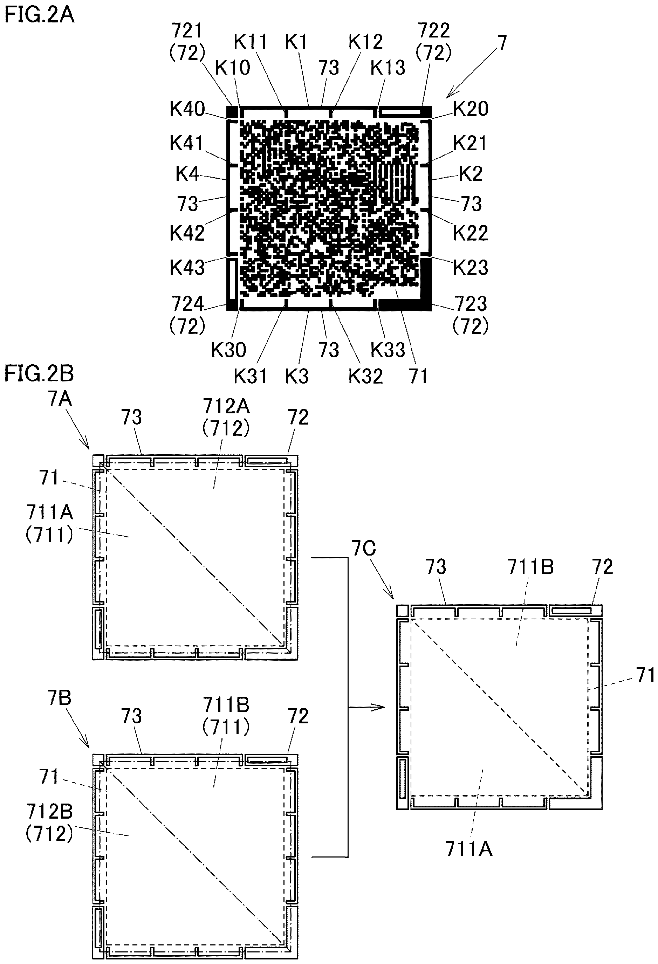

FIG. 2A is a drawing showing the configuration of a two-dimensional code 7 that is used in the present embodiment. The two-dimensional code 7 includes a data area 71 where binary-coded data in the form of a square unit cell are stored in a matrix configuration, image cut-out patterns 72 (721 to 724) which are disposed outside four corners of the data area 71, and four scanning guide portions 73 which are disposed outside four sides of the data area 71. The two-dimensional code 7 has a substantially square shape as a whole.

The scanning guide portions 73 have lines K1 to K4 which surround the data area 71 from four sides and projecting portions K10 to K13, K20 to K23, K30 to K33, and K40 to K43 which are provided into vertical solid lines extending from the corresponding lines K1 to K4 towards the data area 71. The projecting portions K10 to K13, K20 to K23, K30 to K33, and K40 to K43 each have substantially the same length and can be increased or decreased in length in accordance with the data density of the data area 71 or the area of the data area 71.

The image cut-out pattern 721 is formed into a square with four equal sides whose length is equal to the lengths of the projecting portions K10 to K13 and K40 to K43 and is painted out in black. The image cut-out pattern 722 is formed into a rectangle with left and right shorter sides whose length is equal to the length of the projecting portions K10 to K13. In addition, a square pattern is disposed at a right end of the image cut-out pattern 722, and this square pattern has equal sides whose length is equal to the lengths of the projecting portions K10 to K13 and K20 to K23 and is pained out in black.

The image cut-out pattern 723 is formed into an L-shape, which is painted out in black. A left bottom portion and a right top portion of the image cut-out pattern 723 are formed so that lengths of shorter sides thereof are equal to the lengths of the projecting portions K30 to K33 and K20 to K23, respectively. The image cut-out portion 724 is formed into a rectangle in which lengths of upper- and lower-end shorter sides thereof are equal to the length of the projecting portions K40 to K43. In addition, a square pattern with equal sides whose length is equal to the lengths of the projecting portions K30 to K33 and K40 to K43 is disposed at a lower end of the image cut-out pattern 724, and this square pattern is painted out in black.

Cells of the data area 71 can be detected by imaginarily forming a scanning guide line based on the projecting portions K10 to K13, K20 to K23, K30 to K33, and K40 to K43 to thereby correct a scanning direction and scanning within the data area 71 along the scanning direction so corrected.

FIG. 2B is a drawing showing schematically two-dimensional tally codes 7A, 7B, and a restored two-dimensional code 7C. In FIG. 2B, bright and dark patterns of the data area 71, the image cut-out patterns 72 and the scanning guide portions 73 are not shown. Solid line frames show outer external lines of the image cut-out patterns 72 and the scanning guide portions 73, and broken line frames show external lines of the data area 71. The two-dimensional tally codes 7A, 7B each include an effective area 711 and a dummy area 712, which are indicated by alternate long and short dash lines, as the data area 71.

The two-dimensional tally code 7A (a primary two-dimensional tally code) is a code that is generated by the server 5 shown in FIG. 1 to be transmitted to the terminal 3. In the two-dimensional tally code 7A, an effective area 711A (a primary effective area) is formed in an area of a substantially rectangular equilateral triangle shape which is disposed in a left bottom of the data area 71, and a dummy area 712A (a primary dummy area) is formed in an area of a substantially rectangular equilateral triangle shape which is disposed in a right top of the data area 71. Transmission information, which takes the form of an electronic tally, such as identification information (for example, identification information associated with the terminal 3 and the user 2, transaction identification information of the authentication device 4, and the like) or authentication information (a password or the like) is contained in the effective area 711A as primary distribution information. The primary distribution information may contain a time stamp, information on the position of the terminal 3, and the like.

The two-dimensional tally code 7B (a secondary two-dimensional tally code) is information that is generated by the server 5 shown in Fig. 1 to be transmitted to the authentication device 4. In the two-dimensional tally code 7B, an effective area 711B (a secondary effective area) is formed in an area of a substantially rectangular equilateral triangle shape which is disposed in a right top of the data area 71, and a dummy area 712B (a secondary dummy area) is formed in an area of a substantially rectangular equilateral triangle shape which is disposed in a left bottom of the data area 71. As with the two-dimensional tally code 7A, in the case of the two-dimensional tally code 7B, too, transmission information, which takes the form of an electronic tally, such as identification information (for example, identification information associated with the terminal 3 and the user 2, transaction identification information of the authentication device 4, and the like) or authentication information (a password or the like) is contained in the effective area 711B as secondary distribution information, which corresponds to the primary distribution information. The secondary distribution information may also contain a time stamp, information on the position of the terminal 3, and the like. The effective area 711B of the two-dimensional tally code 7B is disposed in the position which corresponds to the position of the dummy area 712A of the two-dimensional tally code 7A, and the dummy area 712B of the two-dimensional tally code 7B is disposed in the position which corresponds to the position of the effective area 711A of the two-dimensional tally code 7A. Consequently, in the present embodiment, a total number of cells of the primary effective area 711A and the primary dummy area 712A is equal to a total number of cells of the secondary effective area 711B and the secondary dummy area 712B.

For example, bright and dark patterns, which are difficult to be distinguished from the effective areas 711A, 711B, can be disposed at random in the dummy areas 712A, 712B. In the two-dimensional tally code 7A and the two-dimensional tally code 7B shown in FIG. 2B, the primary effective area 711A, the primary dummy area 712A, the secondary effective area 711B, and the secondary dummy area 712B constitute the substantially rectangle equilateral triangle shaped areas which are assembled together.

In addition, a two-dimensional code 7C is generated by cutting out the effective area 711A of the two-dimensional tally code 7A and the effective area 711B of the two-dimensional tally code 7B, disposing the effective area 711A and the effective area 711B in positions that corresponds to the positions where the effective area 711A and the effective area 711B are disposed before they are cut out, and combining the effective area 711A and the effective area 711B together as an image of a data area 71. Authentication information or the like is contained in the data area 71 where the two effective areas 711A, 711B are combined together. Then, when the two-dimensional code 7C is imaged and is then decoded by the authentication device 4 which functions as a decoder, the authentication device 4 can obtain the authentication information within the data area 71.

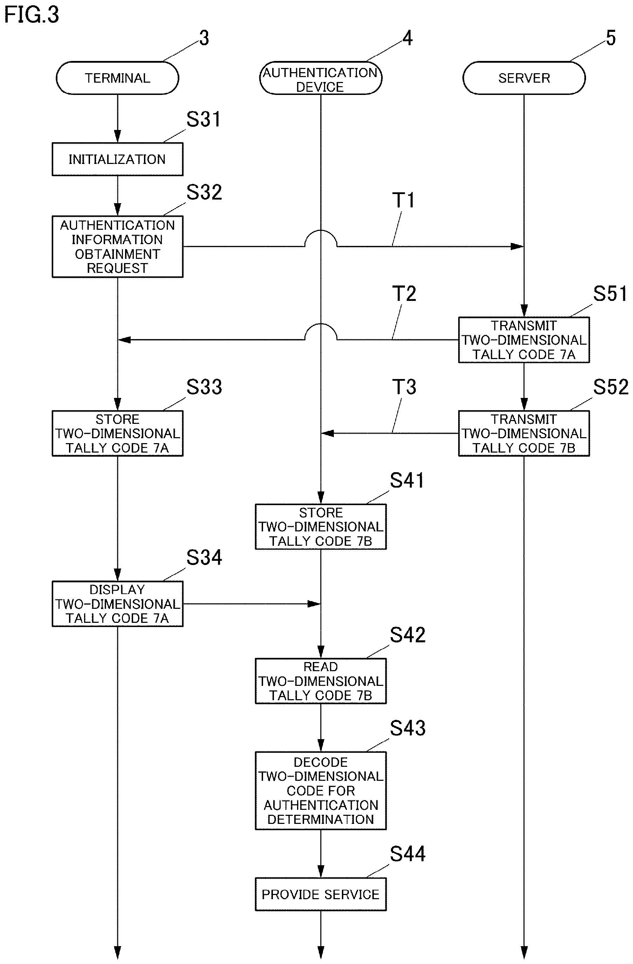

Next, an authentication processing method of the present embodiment will be described. FIG. 3 is a sequence diagram of the system 1. In step S31, as initialization, the terminal 3 executes the following processing operations in advance. That is, the terminal 3 authenticates the user 2 to permit the user 2 to operate the terminal 3, and then, the terminal 3 is authenticated by the server 5 to log in it so as to communicate with the server 5.

In step S32, the terminal 3 transmits an authentication information obtainment request T1 to the server 5. The obtainment request T1 can contain information on the position of the server 3 when the obtainment request T1 is transmitted to the server 5.

In step S51, the server 5 generates (encodes) a two-dimensional tally code 7A which contains a part of authentication information or the like in an effective area 711A as the primary distribution information and transmits the two-dimensional tally code 7A so generated to the terminal 3 (T2). A shape and a position for the effective area 711A are allocated in accordance with an area allocation policy that is set in advance in the storage section 51 of the server 5. In the present embodiment, as shown in FIG. 2B, the effective area 711A is disposed at the left bottom of the data area 71. In addition, the primary distribution information is contained in the effective area 711A of the two-dimensional tally code 7A. When it receives the two-dimensional tally code 7A from the server 5, the terminal 3 stores the two-dimensional tally code 7A so received in the storage section 33 of the terminal 3 in step S33.

On the other hand, the server 5 generates (encodes) a two-dimensional tally code 7B and transmits the two-dimensional tally code 7B so generated to the terminal 3 in step S52 (T3) . The secondary distribution information is contained in an effective area 711B of the two-dimensional tally code 7B. When it receives the two-dimensional tally code 7B from the server 5, the authentication device 4 stores the two-dimensional tally code 7B so received in the storage section 41 in step S41.

In step S34, the terminal 3 displays the two-dimensional tally code 7A on the display section 31. In step S42, when the authentication device 4 is allowed to read an image by the operation or the like of the user 2, the authentication device 4 images the two-dimensional tally code 7A displayed on the terminal 3. The authentication device 4 reads the two-dimensional tally code 7A displayed on the display section 31 and stores it in the storage section 41.

In step S43, the authentication device 4 cuts out an image of the effective area 711A from the two-dimensional tally code 7A in accordance with the area allocation policy stored in advance in the storage section 41 and also cuts out an image of the effective area 711B from the two-dimensional tally code 7B. Then, as shown in FIG. 2B, the authentication device 4 can generate a decoded two-dimensional code 7C having a data area 71 where the effective area 711A and the effective area 711B are combined together. As a result, the primary distribution information contained in the effective area 711A and the secondary distribution information contained in the effective area 711B are image combined together, whereby the authentication device 4 is allowed to obtain the data in the decoded data area 71.

The authentication device 4 determines whether the authentication information contained in the data area 71 of the decoded two-dimensional code 7C satisfies authentication conditions stored in the storage section 41 or the like. Then, when it determines that the decoded authentication information of the data area 71 satisfies the authentication conditions, the authentication device 4 can proceed to a process in step S44. In addition, the authentication device 4 may be caused to proceed to the process in step S44 if a difference between a time of the time stamp contained in the data area 71 of the two-dimensional code 7C and the current time falls within a predetermined threshold value. Alternatively, the authentication device 4 may be caused to proceed to the process in step S44 if the position of the terminal 3 in the position information contained in the effective area 711 of the two-dimensional code 7C and the position of the authentication device 4 fall within a predetermined threshold value. That is, the authentication device 4 can determine whether the service can be provided for the user 2 based on the authentication timing or the position of the terminal 3.

In step S44, the authentication device 4 provides the service for the user 2 who holds the terminal 3. For example, the authentication device 4 can take a deposit of or dispense cash into or from the bank account of the user 2 by reference to the bank account data or the like from the bank server 6 as required.

According to the encoding method performed by the server 5 and the decoding method performed by the authentication device 4, the user 2 can easily start performing the authentication operation in the authentication device 4 by holding the terminal 3 displaying the two-dimensional code thereon in such a manner as to direct the terminal 3 towards the authentication device 4. Additionally, even in the event that the image data of the two-dimensional code is stolen through wire tapping while the two-dimensional code is being transmitted to the terminal 3, the terminal 3 can be prevented from being authenticated by an authentication device to which the other two-dimensional tally code 7B is not distributed. Further, even in the event that the two-dimensional tally code 7A that the terminal 3 obtains is screen shot or is printed onto a piece of paper, since a time limit for a time period during which the terminal 3 can be authenticated can be set by the time stamp, the access to the authentication device 4 can easily be limited.

In addition, the authentication device 4 may be caused to receive the area allocation policy together with the two-dimensional tally code 7B from the server 3 in step S45. Further, a configuration may be adopted in which the server 5 transmits the area allocation policy to the terminal 3 in step S51, and the terminal 3 generates a two-dimensional tally code 7A by an encoder that is installed therein in advance.

### (Embodiment 2)

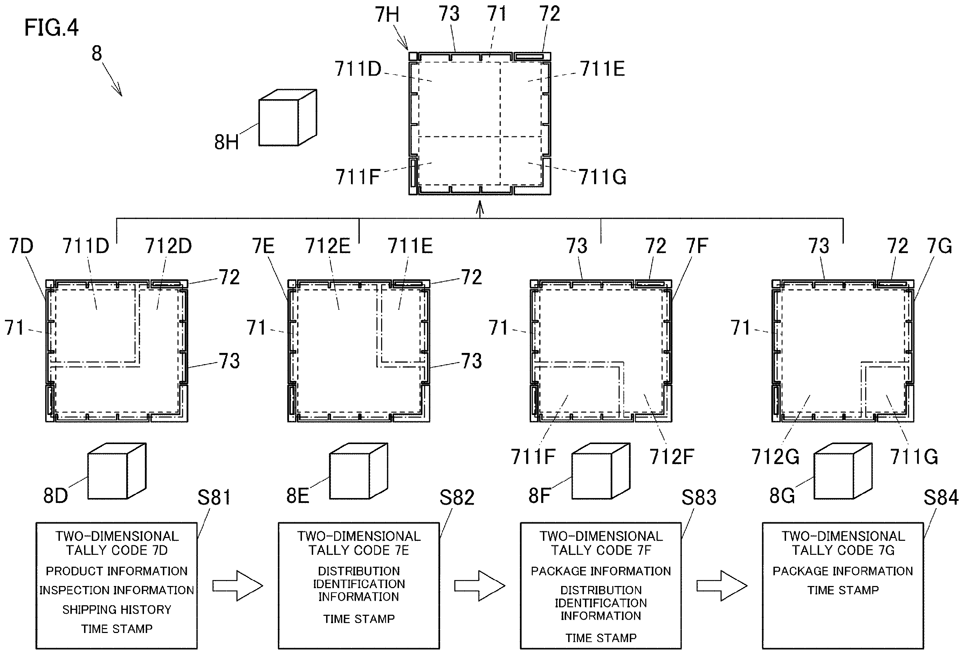

Next, Embodiment 2 will be described. FIG. 4 is a diagram showing a distribution system 8 for delivering agricultural products such as vegetables or fruits to a retailer or the like. The present embodiment will be described by taking it for example that a two-dimensional code 7H can be restored by reading all three or more two-dimensional codes 7D to 7G. Configurations similar to those of Embodiment 1 will be described briefly or the description thereof will simply be omitted.

The distribution system 8 includes devices functioning as encoders which correspond individually to steps S81 to S84. The devices 8D to 8G generate (encode) two-dimensional tally codes 7D to 7G in which effective areas 711D to 711G are disposed in accordance with area allocation policies that are preset therein, and the two-dimensional tally codes 7D to 7G so generated are affixed to packages of products, whereby the two-dimensional tally codes 7D to 7G can be associated with the products.

In a first step S81, a pre-shipment inspection is carried out on products carried to a shipping place, and the products are then packaged for delivery from a producer towards a second step S82 such as a primary intermediate wholesaler. In addition, in the first step S81, a two-dimensional tally code 7D is generated and is affixed to the packages or the like of the products. An effective area 711D of the two-dimensional tally code 7D contains transmission information such as product information on a producer, a producing place, a producing method, and the like, inspection information of the product, a shipping history, and a time stamp containing a producing time and a shipping time. In addition, the effective area 711D can also contain authentication information as distribution information.

In the second step S82, the products collected from the first step S81 are delivered towards a third step S83 such as a secondary intermediate wholesaler. In the second step S82, a distribution identification number, symbol, or the like is taken as an intermediate history of the distribution route. In the second step 82, a two-dimensional tally code 7E is generated and is then affixed to the packages or the like of the products. An effective area 711E of the two-dimensional tally code 7E can contain distribution identification information as the intermediate history of the distribution route and a time stamp containing a collecting time and a shipping time as transmission information. The effective area 711E can also contain authentication information as distribution information.

In the third step S83, the products collected from the second step S82 are delivered towards a fourth step S84 such as a third intermediate wholesaler. In the third step S83, too, the products are divided into lots in accordance with distribution routes, a volume of products contained in a unit lot, and the like, and a distribution identification number, symbol, or the like is taken as an intermediate history of the distribution route. In the third step 83, a two-dimensional tally code 7F is generated and is then affixed to packages or the like of the products so divided. An effective area 711F of the two-dimensional tally code 7F can contain packaging information, a distribution identification number, and a time stamp as transmission information. Here, for example, a divided package number of a re-packaging label set for each package unit into which the products are divided in the process of distribution or a number of a retail package can be adopted as the package information. In addition, the effective area 711F can also contain authentication information as distribution information.

In the fourth step S84, the products collected from the third step 83 are divided into lots corresponding to distribution routes and a volume of products contained in a retail unit, and the products so divided are then delivered to retailers or the like. In the fourth step S84, a two-dimensional tally code 7G is generated and is then affixed to packages or the like of the products so divided. For example, an effective area 711G of the two-dimensional tally code 7G contains package information and a time stamp containing a collecting time and a shipping time as transmission information. In addition, the effective area 711G can also contain authentication information as distribution information.

In the present embodiment, the two-dimensional tally codes 7D to 7G are imaged and read by the device 8H including a decoder. The device 8H cuts out the respective effective areas 711D to 711G from the two-dimensional tally codes 7D to 7G in accordance with the preset area allocation policies and disposes the effective areas 711D to 711G in positions which correspond to the positions in the two-dimensional tally codes 71D to 71G before the effective areas 711D to 711G are cut out so as to be combined together as an image of a data area 71 of a two-dimensional code 7H. Consequently, the device 8H can obtain authentication information into which the pieces of distribution information contained in the effective areas 711D to 711G are combined. Then, if the authentication information satisfies the authentication conditions, the device 8H can obtain the transmission information added in each of the steps S81 to S84.

Thus, with the encoding method and the decoding method of the present embodiment, the step information can individually be added to the effective areas of the two-dimensional tally codes 7D to 7G in the steps S81 to 81G, and when the plurality of pieces of step information are fed to all the effective areas of the two-dimensional tally codes 7D to 7G, the plurality of pieces of step information can be obtained as the transmission information. As a result, a timing at which the information can be obtained can be set in advance, thereby making it possible to transmit the information in a safer fashion with the simple configuration.

### (Embodiment 3)

Next, Embodiment 3 will be described. In Embodiment 1 and Embodiment 2, the dividing number that is the number of two-dimensional tally codes to be distributed is described as being the same as the threshold value that is the number of two-dimensional tally codes necessary to decode the readable two-dimensional code. However, in the present embodiment, an example will be described in which two-dimensional tally codes are generated to be distributed so that the dividing number becomes greater than the threshold value.

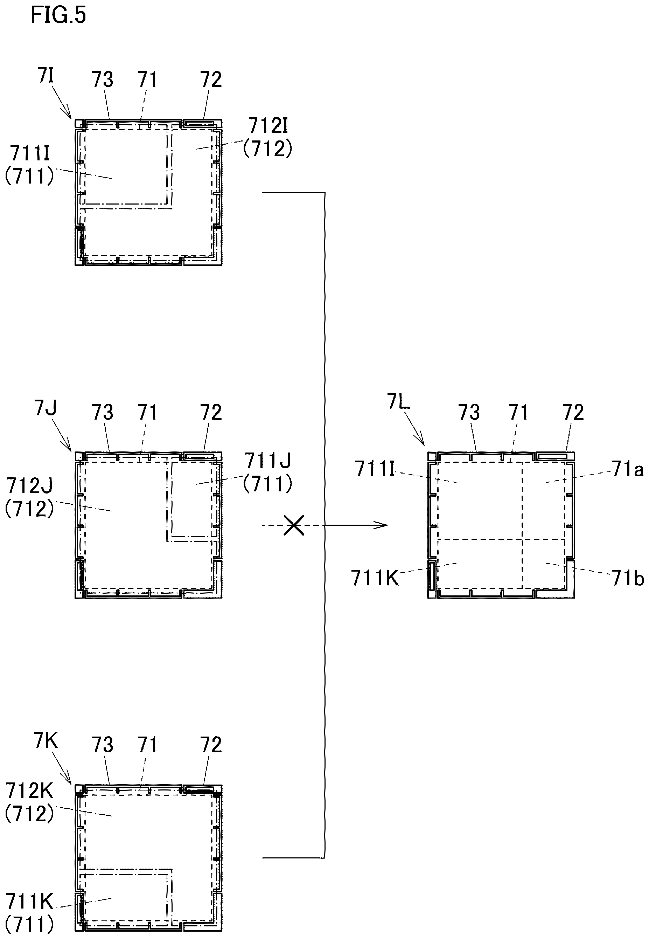

FIG. 5 is a drawing showing an application example of two-dimensional tally codes. In FIG. 5, two-dimensional tally codes 7I to 7K and a two-dimensional tally code 7L are shown schematically.

For example, three two-dimensional tally codes 7I to 7K are encoded by an appropriate encoder and are then distributed to be held to arbitrary media. Then, for example, as distribution information, data "A" and "B" are caused to be contained in an effective area 711 of the two-dimensional tally code 71, data "B" and "C" are caused to be contained in an effective area 711 of the two-dimensional tally code 7J, and data "C" and "A" are caused to be contained in an effective area 711 of the two-dimensional tally code 7K.

Thus, in case a decoder, not shown, which constitutes an information obtaining means, obtains any two two-dimensional tally codes (for example, the two-dimensional tally code 7I and the two-dimensional tally code 7K), the decoder can decode the two-dimensional code 7L which can contain the data "A", "B", and "C", which are the original information. It should be noted that an arbitrary pattern which does not interrupt the reading of the two-dimensional code 7L can be displayed on each of extra areas 71a, 71b of the two-dimensional code 7L where no distribution information is disposed. With the encoding method and the decoding method of the present embodiment, the redundancy of information transmission can be secured.

Thus, with the encoding methods and the decoding methods that are described in the individual embodiments that have been described heretofore, since it is difficult to distinguish the effective area 711 from the dummy area 712 in the two-dimensional tally code, it cannot be determined objectively whether the two-dimensional tally code can be decoded alone or can be decoded when it is combined with another two-dimensional tally code. Thus, security distribution can be performed in a safer fashion with the simple configuration.

In addition, a configuration may be adopted in which as data to be contained in the effective areas of the two two-dimensinal tally codes, encoded information is embedded in the effective area 711 of one two-dimensional tally code, while a cryptographic or decoding key is contained in the effective area 711 of the other two-dimensional tally code.

In addition, in the example shown in FIG. 2B in which the two-dimensional tally code 7A and the two-dimensional tally code 7B are used, the primary effective area 711A, the primary dummy area 712A, the secondary effective area 711B, and the secondary dummy area 712B may be configured such that the effective area and the dummy area are disposed so as to be separated from each other while each is provided with two or more islands. In Embodiment 2 and Embodiment 3, too, the effective area and the dummy area may be disposed so as to be separated from each other similarly.

Further, the embodiments that have been described heretofore are presented as the examples and are not intended to limit the scope of the present invention in any way. The novel embodiments can be carried out in other various forms, and various omissions, replacements and modifications can be made thereto without departing from the spirit and scope of the present invention. Those resulting embodiments and their modifications are included in the scope and gist of the present invention and are also included in the scope of inventions claimed for patent under claims below and their equivalents.

## Claims

1. An encoding method for encoding a two-dimensional code using an encoder,
wherein in accordance with a predetermined area allocation policy, the encoder generates a primary two-dimensional tally code having a primary effective area containing primary distribution information and a primary dummy area, and
generates a secondary two-dimensional tally code having a secondary effective area containing secondary distribution information and disposed in a position where the primary dummy area is disposed and a secondary dummy area disposed in a position where the primary effective area is disposed.

2. The encoding method according to claim 1,
wherein the primary distribution information and the secondary distribution information contain authentication information as transmission information.

3. The encoding method according to claim 1 or 2,
wherein the primary distribution information and the secondary distribution information contain a time stamp and/or position information, and transmission information that is decoded by a decoder when the time stamp and/or the position information satisfies a predetermined threshold value.

4. The encoding method according to any of claims 1 to 3,
wherein a total number of cells of the primary effective area and the primary dummy area is the same as a total number of cells of the secondary effective area and the secondary dummy area.

5. The encoding method according to any of claims 1 to 4,
wherein the primary effective area, the primary dummy area, the secondary effective area, and the secondary dummy area are areas that are assembled together.

6. A decoding method for decoding a two-dimensional code using a decoder,
wherein the decoder obtains a primary two-dimensional tally code having a primary effective area containing primary distribution information and a primary dummy area,
obtains a secondary two-dimensional tally code having a secondary effective area containing secondary distribution information and disposed in a position where the primary dummy area is disposed and a secondary dummy area disposed in a position where the primary effective area is disposed, the primary two-dimensional tally code and the secondary two-dimensional tally code being generated in accordance with a predetermined area allocation policy,
cuts out the primary effective area and the secondary effective area in accordance with the area allocation policy, and
disposes the primary effective area and the secondary effective area in positions corresponding to positions where the primary effective area and the secondary effective area are disposed before the primary effective area and the secondary effective area are cut out to thereby combine the primary effective area and the secondary effective area as a data area of the two-dimensional code.

7. An encoder configured to in accordance with a predetermined area allocation policy generate a primary two-dimensional tally code having a primary effective area containing primary distribution information and a primary dummy area, and generate a secondary two-dimensional tally code having a secondary effective area containing secondary distribution information and disposed in a position where the primary dummy area is disposed and a secondary dummy area disposed in a position where the first effective area is disposed.

8. A decoder configured to obtain a primary two-dimensional tally code having a primary effective area containing primary distribution information and a primary dummy area, obtain a secondary two-dimensional tally code having a secondary effective area containing secondary distribution information and disposed in a position where the primary dummy area is disposed and a secondary dummy area disposed in a position where the primary effective area is disposed, the primary two-dimensional tally code and the secondary two-dimensional tally code being generated in accordance with a predetermined area allocation policy, cut out the primary effective area and the secondary effective area in accordance with the area allocation policy, and dispose the primary effective area and the secondary effective area in positions corresponding to positions where the primary effective area and the secondary effective are disposed before the primary effective area and the secondary effective area are cut out to thereby combine the primary effective area and the secondary effective area as a data area of the two-dimensional code.
